Europäisches Patentamt

European Patent Office

Office européen des brevets

(19)

(11) Numéro de publication: **0210689**
**B1**

# (12) FASCICULE DE BREVET EUROPEEN

(45) Date de publication du fascicule du brevet:
**13.12.89**

(21) Numéro de dépôt: **86201191.3**

(22) Date de dépôt: **08.07.86**

(51) Int. Cl.⁴: **G01N 11/04**, G01N 33/44

(54) **Appareillage pour la détermination rapide des propriétés rhéologiques de matières thermoplastiques.**

(30) Priorité: **18.07.85 FR 8511146**

(43) Date de publication de la demande:
**04.02.87 Bulletin 87/6**

(45) Mention de la délivrance du brevet:
**13.12.89 Bulletin 89/50**

(84) Etats contractants désignés:
**AT BE CH DE FR GB IT LI LU NL SE**

(56) Documents cités:
**EP-A- 0 013 594**
**EP-A- 0 014 025**
**DE-U- 7 640 849**
**US-A- 3 270 553**
**US-A- 3 526 126**
**US-A- 4 333 336**
**US-A- 4 425 790**
**US-A- 4 449 395**
**US-H- 869 014**

(73) Titulaire: **SOLVAY & Cie (Société Anonyme), Rue du Prince Albert, 33, B-1050 Bruxelles(BE)**

(72) Inventeur: **Ruelle, Jean-Jacques, rue de la Vanne 6, B-5905 Saint-Remy Geest(BE)**
Inventeur: **D'Andrea, Giacomo, Avenue des Croix de Guerre 195, B-1120 Bruxelles(BE)**
Inventeur: **Asselberghs, Léopold, Hammeveld 2, B-1881 Merchtem(BE)**

(74) Mandataire: **Bouchoms, Maurice et al, Solvay & Cie Département de la propriété industrielle 310, rue de Ransbeek, B-1120 Bruxelles(BE)**

ACTORUM AG

## Description

La présente invention concerne un appareillage pour la détermination rapide et précise de propriétés rhéologiques de matières thermoplastiques telles que l'indice de fusion (melt index), les courbes viscosimétriques et/ou le gonflement à l'extrusion.

Dans les procédés de fabrication et de mise en oeuvre des matières thermoplastiques, il importe de pouvoir disposer dans des délais très courts, d'un maximum d'informations sur les propriétés rhéologiques de ces matières afin de pouvoir contrôler efficacement ces opérations.

On connaît certes déjà des appareillages qui permettent une évaluation rapide et même continue de certaines propriétés rhéologiques des matières thermoplastiques. Toutefois ces appareils sont spécifiques pour évaluer une propriété particulière et ils ne peuvent fonctionner selon les normes usuelles.

Ainsi le PORPOISE Viscosimeter mis au point par GEC ELECTRICAL PROJECTS MARINE and OFFSHORE et qui comporte une pompe à engrenages en relation avec un capillaire permet certes une évaluation continue de la viscosité d'une matière thermoplastique mais cet appareillage ne peut être adapté aisément à la mesure d'une autre propriété rhéologique telle que par exemple un indice de fusion.

On connaît également par le modèle d'utilité allemand GM7640849 un appareillage pour la détermination de propriétés rhéologiques de matières thermoplastiques telles que l'indice de fusion (melt-index) les courbes viscosimétriques et/ou le gonflement à l'extrusion, ledit appareillage comprenant:

— un cylindre destiné à recevoir une dose de matière thermoplastique et équipé d'une filière à capillaire adaptée à la mesure rhéologique à effectuer

— un piston pouvant coulisser dans le cylindre de façon à s'appliquer contre la dose de matière thermoplastique

— un moteur à commande pas à pas assurant un déplacement contrôlé du piston dans le cylindre pour expulser la matière thermoplastique via la filière à capillaire

— un capteur de force entre le moteur et le piston donnant un signal en fonction de la force appliquée au piston

— un tachymètre pouvant régler la vitesse de déplacement du piston et

— un boîtier de commande et de contrôle équipé d'un régulateur PID et d'un régulateur de consigne qui lors d'une mesure d'indice de fusion impose, sur base du signal émis par le capteur de force, une force constante prédéterminée au piston et qui lors d'une mesure de viscosité impose une vitesse de déplacement constante du piston.

Avec un tel appareillage il n'est toutefois pas possible d'effectuer directement et automatiquement une évaluation des propriétés rhéologiques, selon les normes ASTM, d'un échantillon de propriétés inconnues. En effet, il n'est pas possible, par exemple dans le cas d'une mesure d'indice de fusion, de prédéterminer les conditions de mesure à respecter tels que le temps de mesure et la dose de produit à introduire dans le cylindre car celles-ci sont fonction de l'indice de fusion. Il en résulte qu'il est nécessaire d'effectuer un essai hors norme afin d'évaluer la gamme de fluidité présumée du produit testé. En outre cet appareillage nécessite la présence continue d'un opérateur notamment pour assurer que le piston de mesure se trouve à la distance imposée pour le début de la mesure (50 mm) à la fin du temps de conditionnement thermique de l'échantillon testé imposé par la norme.

La présente invention a pour objet de remédier à ces inconvénients et de fournir un appareillage universel permettant d'évaluer automatiquement des propriétés rhéologiques différentes telles que des indices de fusion, des viscosités et/ou des gonflements à l'extrusion et ce soit selon les normes en vigueur et ce en un minimum de temps où encore selon une méthode plus rapide mais tout aussi précise.

La présente invention a pour objet de remédier à ces inconvénients et de fournir un appareillage universel permettant d'évaluer des propriétés rhéologiques différentes telles que des indices de fusion, des viscosités et/ou des gonflements à l'extrusion et ce soit selon les normes en vigueur et ce en un minimum de temps ou selon une méthode plus rapide mais tout aussi précise.

La présente invention concerne dès lors un appareillage pour la détermination rapide des propriétés rhéologiques d'une matière thermoplastique comprenant:

- un boîtier de commande et de contrôle;
- un cylindre destiné à recevoir une dose déterminée de la matière thermoplastique à évaluer et équipé d'un chemisage thermostatisé pour le conditionnement thermique, durant au moins 300 secondes et à température prédéterminée, de la dose de matière thermoplastique à évaluer;
- un piston pouvant coulisser dans le cylindre de façon à s'appliquer contre la dose de matière thermoplastique;
- un système échangeur permettant d'équiper le cylindre d'une filière à capillaire adaptée à la mesure rhéologique à effectuer;
- un moteur à commande pas à pas assurant un déplacement contrôlé du piston dans le cylindre pour expulser la matière thermoplastique via la filière à capillaire et
- un capteur de force disposé entre le moteur et le piston donnant un signal en fonction de la force appliquée au piston caractérisé en ce qu'il comporte en outre un système électronique à microprocesseur contrôlant le moteur pas à pas en fonction de la position du piston et/ou du signal émis par le capteur de force de façon telle, qu'à la fin du conditionnement thermique, le piston se trouve à une distance de la filière à capillaire autorisant la mesure à effectuer et agisse, depuis un laps de temps variant de 10 à 180 secondes, sur la dose de matière thermoplastique à évaluer selon un paramètre de vitesse de déplacement ou de force appliquée imposé par le type de mesure rhéologique à effectuer.

L'appareillage conforme à l'invention peut dès lors être exploité soit pour déterminer un indice de fusion, soit une viscosité d'une matière thermoplastique simplement en l'équipant d'une filière à capillaire appropriée et en commutant le système électronique à microprocesseur soit en régulation de la force appliquée sur le piston, soit en régulation de vitesse de déplacement du piston.

En outre, selon une variante de réalisation qui se révèle particulièrement intéressante, l'appareillage conforme à 'invention peut être équipé d'un dispositif permettant la découpe du jonc de matière thermoplastique extrudé au ras de la filière à capillaire et d'un dispositif de détection de l'extrémité menante du nouveau jonc extrudé situé à une distance prédéterminée de l'extrémité de la filière à capillaire. De ce fait, l'appareillage conforme à l'invention peut également être exploité pour déterminer, de façon connue, les caractéristiques de gonflement à l'extrusion d'une matière thermoplastique, cette mesure se faisant, en général, conjointement avec des mesures de viscosité.

Selon un mode de réalisation qui est préféré, le dispositif de découpe du jonc extrudé est constitué par une lame flexible, fixée au bout d'un arbre rotatif qui peut être actionné automatiquement par un moteur électrique et le dispositif de détection est constitué par des fibres optiques disposées dans un anneau concentrique à l'axe du cylindre, la distance entre le dispositif de détection optique et l'extrémité de la filière à capillaire étant généralement fixée à 70 mm. Il est toutefois bien évident que ces dispositifs de découpe et de détection ne sont nullement critiques et que, dès lors, d'autres dispositifs fiables peuvent être envisagés.

Le boîtier de commande et de contrôle contient le système électronique à microprocesseur contrôlant le moteur pas à pas, le régulateur de température ainsi que le matériel électronique nécessaire pour la gestion des séquences d'utilisation, pour les mesures, les calculs et l'affichage des résultats, etc... La face avant de ce boîtier comporte les boutons de commande et de sélection, les tableaux d'affichage et éventuellement des témoins d'alarme destinés à signaler tout fonctionnement défectueux. Le boîtier de commande peut être raccordé à une imprimante et/ou un écran qui visualisent les conditions d'essai et les résultats obtenus.

Selon un mode de réalisation avantageux, le cylindre, le chemisage thermostatisé et le piston de l'appareillage selon l'invention sont réalisés en conformité avec la norme ASTM D 1238-82 de façon à permettre des mesures normalisées en ce qui concerne la détermination des indices de fusion.

Dans le même but, le dispositif échangeur de filières qui peut être du type à tiroir ou à tourelle est, de préférence conçu pour être garni d'un jeu de filières normalisés soit d'une filière L/D:8/2,095 pour des mesures d'indice de fusion et de filières L/D:15/1 et 30/2 pour des mesures de viscosité et/ou de gonflement. De préférence, le dispositif échangeur de filières est équipé de détecteurs de proximité assurant un contrôle du choix correct de la filière en fonction de la propriété rhéologique à effectuer et contrôlant la mise en place correcte de cette filière sur le cylindre. Ces détecteurs peuvent activer des témoins d'alarme prévus sur le boîtier de commande et de contrôle.

Ainsi qu'il a été précisé, le déplacement du piston dans le cylindre est assuré par un moteur à commande pas à pas dont les impulsions de commande sont contrôlées par le système électronique à microprocesseur. L'entraînement du piston par ce moteur est, de préférence assuré par un système à vis et écrou. Selon un mode de réalisation qui est préféré le système de transmission et le moteur sont choisis de façon telle qu'un déplacement linéaire du piston de $1.10^{-3}$ m requiert de 500 à 10 000 et de préférence de 1000 à 3 000 impulsions de commande du moteur. De cette façon, la position du piston peut être déterminée à tout moment avec une précision du l'ordre de $0,5.10^{-6}$ m.

Le capteur de force, disposé entre le moteur à commande pas à pas et le piston est, de préférence, équipé d'éléments de mesures constituées par des cellules de force à jauge de contrainte.

Etant donné que les mesures rhéologiques réalisables au moyen de l'appareillage selon l'invention peuvent exiger l'application sur le piston de forces pouvant varier de quelques Newtons à plusieurs milliers de Newtons tant lors des mesures que durant le conditionnement thermique, il n'est pas possible d'utiliser une seule cellule de force pour assurer dans tous les cas d'utilisation une mesure continue et précise de ces forces. Dans la pratique, on fait, dès lors, appel à une pluralité de cellules de force ayant des gammes de mesures étagées.

Ainsi, par exemple, on peut avantageusement utiliser une cellule de force de gamme 0-100 N et une cellule de force de gamme 0-2 000 N, ces deux cellules étant fixées sur une potence pivotante permettant la mise en service alternée de l'une ou de l'autre cellule selon la mesure rhéologique à effectuer et selon la matière thermoplastique à évaluer.

Dans ce cas, il peut se révéler intéressant de prévoir une troisième position pour la potence, position dans laquelle les deux cellules de force sont hors service et écartées de l'axe du cylindre de façon à permettre un accès aisé au cylindre par exemple lors d'une opération de nettoyage.

Selon un mode de réalisation qui est préféré, le capteur de force est constitué par une pluralité de cellules de force disposées en série et de gamme de mesures croissante, chaque cellule de force étant insérée dans un boîtier qui assure le transfert de l'effort exercé sur la cellule de force qu'il contient à la suivante de gamme de mesures plus élevée lorsque cet effort dépasse la valeur maximum acceptable pour cette cellule de force.

A cet effet et selon un mode de réalisation particulièrement apprécié, chaque cellule de force successive est insérée dans un boîtier résistant ouvert, les divers boîtiers étant superposés. Le dimensionnement de chaque boîtier est réalisé de façon telle que la paroi latérale d'un boîtier vient en contact avec le fond fermé du boîtier précédant ou suivant dès que la valeur de l'effort transmis à la cellule de force insérée dans ce boîtier atteint la valeur maximum acceptable pour cette cellule de force, la cellule de force insérée dans le boîtier précédant ou suivant, de gamme de mesures plus élevée assurant alors la reprise de l'effort à mesurer.

Selon un mode de réalisation qui est préféré dans ce cas chaque cellule de force est, en outre, protégée mécaniquement par un système de transmission de la force à mesurer constitué par un ressort taré précontraint à la valeur maximum acceptable pour chaque cellule de force qui assure la transmission de l'effort à mesurer. De cette façon, lorsque la force appliquée à une cellule de force quelconque risque de dépasser la valeur maximum acceptable, la déformation du ressort taré correspondant empêche l'application d'une force excessive sur la cellule de force.

En utilisant un capteur de force équipé de cellules de force en série qui vient d'être décrit, on évite en particulier tout accident pouvant découler d'une force excessive transmise accidentellement en système de mesure de la force.

En outre, ainsi qu'il sera expliqué plus loin, le recours à un tel capteur de force permet d'effectuer des mesures rhéologiques sur des matières thermoplastiques très différentes en utilisant toujours une dose identique de la matière thermoplastique à évaluer.

Conformément à l'invention, l'appareillage comporte en outre un système électronique à microprocesseur qui contrôle en continu le moteur à commande pas à pas et partant les déplacements du piston et/ou la force appliquée sur celui-ci et ce en fonction de la position occupée à chaque instant par le piston et/ou en fonction du signal émis par le capteur de force tant durant la phase de conditionnement thermique que lors de la mesure rhéologique de la matière thermoplastique à évaluer de façon telle qu'à la fin du conditionnement thermique le piston se trouve à une distance de la filière à capillaire autorisant la mesure à effectuer et agisse depuis un laps de temps variant de 10 à 180 secondes sur la matière plastique à évaluer selon des paramètres de vitesse de déplacement ou de force appliquée imposés par le type de mesure rhéologique à effectuer, ces paramètres étant en outre maintenus constants pendant toute la durée de la mesure.

En fait, lors d'une mesure d'indice de fusion, le piston doit nécessairement appliquer une force constante prédéterminée sur la matière thermoplastique puisqu'une telle mesure revient à déterminer le poids de matière plastique qui est expulsé par une filière à capillaire déterminée, en un temps donné et sous l'application d'une force déterminée tandis que lors d'une mesure de viscosité ou de gonflement le piston doit être animé d'une vitesse de déplacement constante et prédéterminée durant toute la mesure. Il apparaît donc que le système électronique à microprocesseur doit assurer soit une régulation de force soit une régulation de vitesse selon la mesure rhéologique à effectuer. En outre pour obtenir des résultats reproductibles on sait que les mesures rhéologiques doivent toujours être débutées lorsque le piston atteint une distance prédéterminée de la filière à capillaire, cette distance étant généralement fixée à 50 mm.

Régulation de force - Mesure d'indices de fusion

Lors de la mesure d'indice de fusion, le système électronique doit assurer la régulation de la force appliquée au piston, le cylindre étant dans ce cas équipé d'une filière adaptée pour la mesure d'un indice de fusion.

Lors d'une telle mesure, le système électronique, dans une première étape, après 5 à 30 secondes de conditionnnement thermique de la dose de matière thermoplastique à évaluer, contrôle le moteur à commande pas à pas de façon telle que le piston durant 50 à 150 secondes applique sur la dose de matière plastique une force constante égale à celle devant être appliquée durant la mesure à effectuer, évalue la vitesse de déplacement du piston sous l'effet de cette force et détermine les paramètres de régulation idéaux en fonction de la matière thermoplastique examinée, dans une seconde étape, contrôle le moteur à commande pas à pas de façon telle que la force appliquée au piston est réduite ou accrue durant un certain laps de temps et, dans une troisième étape, après 120 à 290 secondes de conditionnement thermique contrôle le moteur à commande pas à pas de façon telle que le piston applique de nouveau sur la dose de matière thermoplastique à évaluer une force égale à la force devant être appliquée durant la mesure, la troisième étape étant initiée à un instant tel que l'application de cette force amène le piston à la distance prédéterminée de la filière autorisant la mesure à la fin du délai imparti pour le conditionnement thermique, cette force étant maintenue constante pendant toute la durée de la mesure subséquente.

L'appareillage conforme à l'invention se distingue, dès lors des appareillages de l'art antérieur par le fait que la consigne à respecter durant la mesure rhéologique à effectuer, dans le cas présent la constance de la force appliquée par le piston, est déjà respectée avant la mesure de telle sorte que le piston, à la fin du conditionnement thermique non seulement se trouve à la distance de la filière autorisant la mesure à effectuer mais encore est soumis à la consigne imposée pour la mesure depuis un certain laps de temps.

De cette façon, l'appareillage lors de son utilisation en phase de mesure se trouve en régime stable d'écoulement dès le début de la mesure.

En outre, tout comme les appareillages connus, l'appareillage selon l'invention permet d'effectuer la mesure rhéologique souhaitée à la fin du délai imparti pour le conditionnement thermique de la matière thermoplastique à évaluer.

Selon une variante de réalisation, qui est préférée lorsqu'on ne dispose au préalable d'aucune indication sur les caractéristiques rhéologiques de la matière thermoplastique à évaluer, après 5 à 30 secondes de conditionnement thermique le système électronique durant le début de la première étape contrôle d'abord le moteur à commande pas à pas de façon telle que le piston applique tout d'abord sur la dose de matière thermoplastique une force nettement inférieure à la force devant être appliquée durant la mesure et ce durant 10 à 90 secondes de façon à permettre une première évaluation du gain du système électronique et sur cette base une estimation de la durée idéale de la phase suivante de la première étape durant laquelle le système électronique, via le moteur de commande pas à pas, applique sur la dose de matière thermoplastique une force égale à celle devant être appliquée durant la mesure rhéologique à effectuer.

Il a en effet été constaté que les paramètres de fonctionnement du système électronique sont sensiblement fonction de la nature de la matière thermoplastique à évaluer et dépendent peu de la force appliquée pour déterminer ces paramètres. Il en résulte donc que la connaissance du gain du système électronique pour une force appliquée donnée permet le calcul du gain pour une force appliquée différente avec une bonne approximation.

En d'autres termes, la connaissance de la vitesse de déplacement du piston sous l'action d'une faible force (1 à 20 N) permet d'évaluer la vitesse de déplacement du piston sous une force plus élevée à appliquer lors de la mesure et partant de déterminer une durée d'application de cette force durant la première étape compatible avec une amenée du piston à la distance prédéterminée de la filière à la fin du conditionnement thermique.

Durant cette première étape, l'appareillage procède à une nouvelle évaluation de la vitesse de déplacement réelle du piston lorsque celui-ci est soumis à la force à appliquer durant la mesure.

Selon la matière thermoplastique à évaluer, cette vitesse de déplacement du piston est soit trop élevée (matière thermoplastique fluide) soit trop faible (matière thermoplastique visqueuse) pour amener le piston à la distance prédéterminée de la filière à la fin du temps imparti pour le conditionnement thermique.

Dans le premier cas, durant la seconde étape, le système électronique contrôle le moteur à commande pas à pas de façon à réduire la force appliquée au piston durant un laps de temps tel qu'après écoulement de ce temps, le système électronique puisse à nouveau, via le moteur à commande pas à pas, appliquer au piston, durant la troisième étape, la force à utiliser pour la mesure rhéologique à effectuer et amener ainsi ce piston à la distance prédéterminée de la filière à la fin du temps imparti par le conditionnement thermique. Selon un mode de réalisation préféré, durant la seconde étape, la force appliquée au piston est réduite à zéro, le moteur à commande pas à pas n'étant plus excité, ceci afin de réduire au minimum la durée de la seconde étape et partant d'allonger celle de la troisième étape.

Dans le second cas, durant la seconde étape, le système électronique contrôle le moteur à commande pas à pas de façon à accroître la force appliquée au piston durant un laps de temps tel qu'après écoulement de ce temps, le système électronique puisse à nouveau, via le moteur à commande pas à pas, appliquer au piston, durant la troisième étape, la force à utiliser pour la mesure rhéologique à effectuer et amener celui-ci à la distance prédéterminée de la filière à la fin du temps imparti pour le conditionnement thermique. Selon un mode de réalisation préféré, durant la seconde étape, la force appliquée au piston est la force maximale pouvant être supportée par l'appareillage, ceci de nouveau afin de raccourcir la durée de la seconde étape et partant d'accroître celle de la troisième.

Avec l'appareillage selon l'invention, il est donc possible d'effectuer des mesures d'indices de fusion dès la fin du conditionnement thermique et ce dans d'excellentes conditions puisque la consigne à respecter durant la mesure - force constante appliquée au piston - et déjà satisfaite avant le début de la mesure et que l'appareillage se trouve donc déjà en régime.

Les indices de fusion sont déterminées à partir de la vitesse de déplacement du piston soumis à la force constante imposée.

La détermination des indices de fusion sous les charges usuelles 3,19 N (0,325 kgf), 21,18 N (2,16 kgf), 49,03 N (5 kgf) ou 211,8 N (21,6 kgf) peut en outre être effectuée conformément à la norme ASTM D1238-82 méthode A c'est-à-dire avec une durée de mesure variant de 330 à 660 secondes selon la fluidité à chaud de la matière thermoplastique à évaluer lorsque, ainsi qu'il est préféré, on utilise un appareillage comportant un ensemble - cylindre, piston, filière - en conformité avec cette norme.

Toutefois, compte tenu du fait que le recours à un moteur à commande pas à pas permet une détermination très précise des positions successives du piston et que le système électronique permet de débuter les mesures dans des conditions idéales il a été constaté que des indices de fusion déterminés dans un laps de temps de mesure nettement plus court, de l'ordre de 10 à 60 secondes et même moins sont parfaitement comparables à ceux obtenus selon la méthode imposée par la norme précitée et ce avec une reproductibilité remarquable.

En pratique, avec l'appareillage conforme à l'invention, la demanderesse détermine habituellement des indices de fusion en 30 secondes qui sont en parfaite corrélation avec ceux déterminés selon la norme ASTM précitée.

L'appareillage conforme à l'invention se révèle, dès lors, particulièrement intéressant pour effectuer des mesures de contrôle régulières et rapides dans une installation de production ou de mise en oeuvre de matières thermoplastiques et plus particulièrement de polyoléfines.

Selon un mode d'exploitation de l'appareillage selon l'invention qui se révèle intéressant, on règle celui-ci de façon telle qu'il effectue au moins trois mesures successives de durées égales durant le temps imparti pour la mesure et effectue une comparaison entre ces mesures et leur moyenne en vue de détecter un éventuel écart important (supérieur à 25%) rendant la détermination suspecte.

Lorsque l'appareillage selon l'invention est équipé d'un capteur de force équipé de cellules de force en série ainsi qu'il est préféré, la force appliquée au piston lors du conditionnement thermique durant la seconde étape peut varier dans de très larges limites et, dès lors, la dose de matière thermoplastique à introduire dans le cylindre, lors d'une mesure, peut être constante quel que soit l'indice de fusion de cette matière.

Cette particularité de l'appareillage conforme à l'invention se révèle très intéressante dans le cas où l'on désire automatiser le fonctionnement pour effectuer des séries de mesures successives sur des matières thermoplastiques par exemple à titre de contrôles périodiques dans une installation de fabrication.

Régulation de vitesse - Mesure de viscosité et de gonflement

Le système électronique à microprocesseur, dans ce cas, assure la régulation de la vitesse de déplacement du piston, ce cylindre étant équipé d'une filière adaptée pour la mesure à effectuer.

Lors d'une telle mesure, le système électronique, après 5 à 30 secondes de conditionnement thermique de la dose de matière thermoplastique à évaluer, détermine, en fonction de la position du piston en contact avec la dose et du temps de conditionnement imparti, la vitesse moyenne à imposer au déplacement du piston pour amener celui-ci à la distance prédéterminée de la filière à la fin du délai imparti pour le conditionnement thermique et compare cette vitesse moyenne à la vitesse constante à imposer au piston pour la mesure à effectuer, puis dans une première étape, le système électronique, en fonction du résultat de cette comparaison, contrôle le moteur à commande pas à pas de façon telle que le piston se déplace à une vitesse plus faible ou plus élevée que cette vitesse et, dans une seconde étape, contrôle le moteur à commande pas à pas de façon telle que le piston se déplace à la vitesse constante imposée pour la mesure à effectuer, cette seconde étape étant initiée à un instant tel que cette vitesse constante de déplacement du piston amène celui-ci à la distance prédéterminée de la filière à la fin du délai imparti pour le conditionnement thermique, cette vitesse constante de déplacement du piston étant maintenue pendant toute la durée de la mesure à effectuer.

Dans la seconde étape, le système électronique impose une vitesse de déplacement plus faible que la vitesse moyenne lorsque la vitesse constante de déplacement à imposer au piston pour la mesure à effectuer est supérieure à cette vitesse moyenne et, par contre, impose au piston une vitesse de déplacement plus élevée que la vitesse moyenne dans le cas contraire.

Afin de réduire la durée de la première étape et partant d'allonger celle de la seconde étape, il est préféré, durant la première étape, d'imposer au piston une vitesse de déplacement aussi faible ou aussi élevée que possible. Dans la pratique on préfère soit une vitesse de déplacement nulle par un arrêt du moteur à commande pas à pas, soit une vitesse de déplacement aussi élevée que possible compatible avec la résistance mécanique de l'appareillage.

L'appareillage conforme à l'invention se distingue donc une nouvelle fois des appareillages déjà connus par le fait que la consigne à respecter durant la mesure à effectuer, dans le cas présent une vitesse de déplacement du piston constante et prédéterminée est déjà respectée avant la mesure de telle sorte que, lorsque le piston se trouve, à la fin du conditionnement thermique, à la distance de la filière autorisant la mesure à effectuer, celui-ci est animé depuis un certain temps de la vitesse imposée pour la mesure à effectuer. L'appareillage, lors de son utilisation en phase de mesure, se trouve donc de nouveau en régime stable d'écoulement dès le début de la mesure à effectuer. La mesure de viscosité est calculée à partir de la force exercée sur le piston pour maintenir la vitesse imposée.

Selon un mode de réalisation de l'appareillage qui est préféré dans les 30 secondes qui précèdent le moment où le piston atteint la distance prédéterminée de la filière, celui-ci effectue une pluralité de mesures successives de la force appliquée sur le piston par l'intermédiaire du capteur de force et compare ces mesures entre elles et avec leur moyenne de façon à détecter tout écart important, par exemple de plus de 5 %, augurant d'une éventuelle instabilité d'écoulement, c'est-à-dire d'un écoulement oscillant qui est susceptible de fausser la mesure à effectuer. Dans ce dernier cas, la séquence de mesure est interrompue et un témoin d'alarme prévu sur la face avant du boîtier de commande de l'appareillage peut signaler à l'opérateur la raison de cette interruption.

L'appareillage selon l'invention permet donc de déterminer la viscosité dynamique de toute matière plastique et ce sous un gradient de vitesse quelconque, la mesure pouvant être effectuée en 30 secondes ou dans un délai plus court et ce avec une précision remarquable.

Pour effectuer simultanément une mesure complémentaire de gonflement à l'extrusion, le jonc extrudé par la filière est découpé au ras de celle-ci dès que le piston atteint la distance prédéterminée de la filière et le détecteur est mis en service. Dès que l'extrémité menante du jonc extrudé atteint le détecteur, l'appareillage peut calculer le gonflement et afficher celui-ci sur la face avant du boîtier de commande. Ce gonflement est déterminé à partir de l'espace parcouru par le piston au moment de la détection du nouveau jonc.

Le système électronique à microprocesseur peut être réalisé de façon quelconque pour autant qu'il assure les régulations décrites ci-avant.

En général ce système comporte :

- un système à microprocesseur qui programme et gère les différentes séquences de mesure;
- un bloc de commande du moteur pas à pas qui, sous le contrôle du microprocesseur, reçoit une tension analogique de commande provenant soit d'un régulateur de force, dans le cas d'une mesure d'indice de fusion, soit d'un générateur de consigne, dans le cas d'une mesure de viscosité et/ou de gonflement et dont la sortie fournit au moteur les impulsions de commande nécessaires à son fonctionnement et
- un régulateur de force, mis uniquement en service lors de la mesure d'un indice de fusion, que est du type proportionnel-intégral et qui utilise les valeurs de gain choisies automatiquement sous le contrôle du système à microprocesseur.

L'appareillage conforme à l'invention est en outre explicité plus en détail par l'exemple de réalisation pratique donné ci-après et dans la description duquel on se référera aux figures annexées dans lesquels :

- la fig. 1 est un schéma de l'appareillage conforme à l'invention;
- la fig. 2 est une vue en coupe d'un capteur de force équipé de deux cellules de force en série;
- la fig. 3 est un schéma du boîtier de commande et de contrôle.

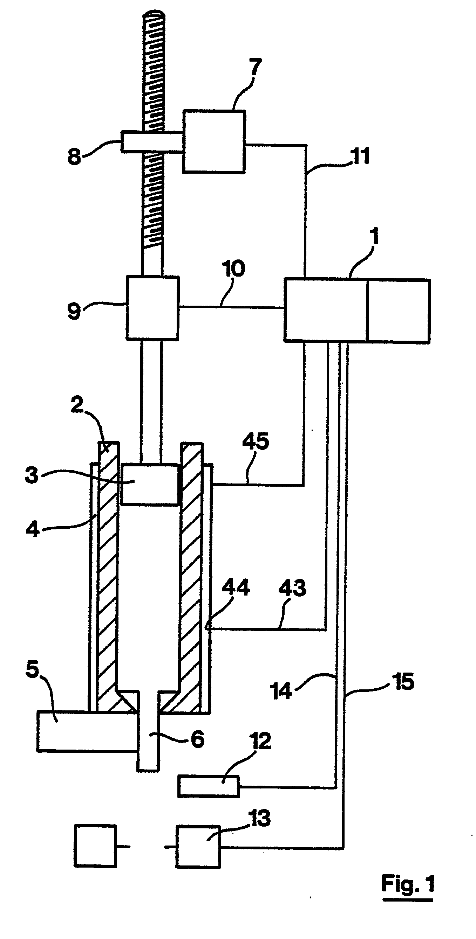

Ainsi qu'il apparaît sur le schéma de la fig. 1, l'appareillage conforme à l'invention comporte un boîtier de commande et de contrôle 1 contenant notamment le système électronique à microprocesseur, un cylindre 2 et un piston 3 réalisés en conformité avec la norme ASTM D 1238-82, le cylindre 2 étant équipé d'un chemisage thermostatisé 4 réalisé également en conformité avec la norme précitée.

Le cylindre 2 est en outre pourvu d'un dispositif échangeur à tiroir 5 permettant d'équiper ce cylindre d'une filière 6 adaptée à la mesure rhéologique à effectuer.

Le déplacement du piston 3 dans le cylindre 2 est assuré par moteur à commande pas à pas 7 et ce par l'intermédiaire du systèmes à vis et écrou 8.

Un dispositif capteur de force 9 qui sera détaillé plus loin est disposé entre le moteur 7 et le piston 3 et envoie par le câble 10 un signal proportionnel à la force exercée par le piston vers le boîtier de commande 1. Le moteur 7 est commandé par le câble 11 raccordé au boîtier de commande 1.

L'appareillage comporte également un dispositif 12 de découpe du jonc au ras de la filière 6 dont la partie active est constituée d'une lame flexible fixée au bout d'un arbre rotatif entraîné par un moteur électrique ainsi qu'un dispositif optique 13 de détection du jonc situé à 70 mm de l'extrémité de la filière et constitué par des fibres optiques disposées dans un anneau concentrique à l'axe du cylindre 2, ces deux dispositifs étant raccordés au boîtier de commande 1 par des câbles 14 et 15.

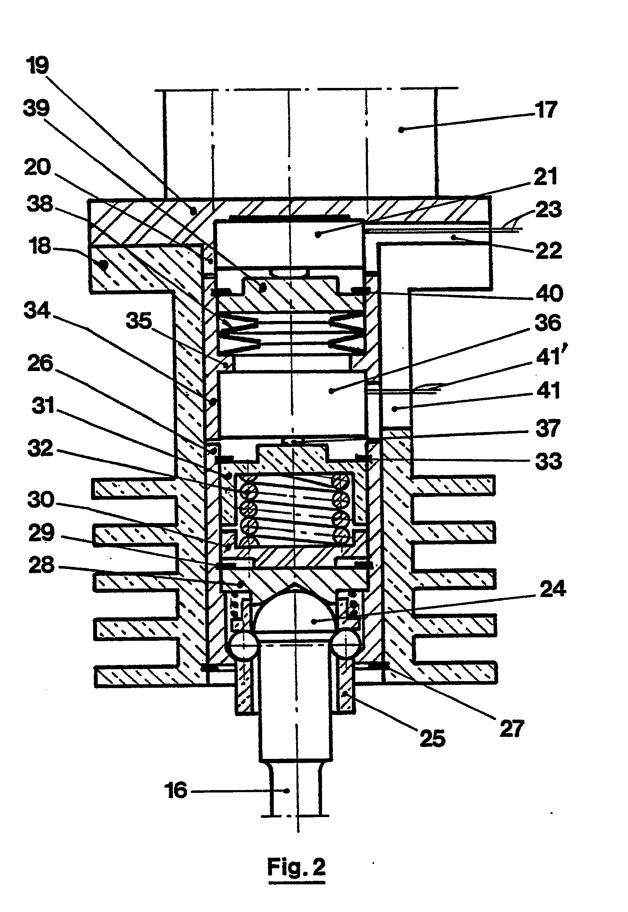

Ainsi qu'il apparaît plus particulièrement sur la figure 2, le capteur de force 9 connecté entre la tige de commande 16 du piston 3 et la commande de déplacement 17 contrôlée par le moteur pas à pas 7, est constitué par une enveloppe externe 18 de forme annulaire et cylindrique contenant les dispositifs de mesure et équipée à sa partie supérieure d'un couvercle circulaire 19 raccordé directement à la commande de déplacement 17.

Le couvercle 19 présente un rebord annulaire interne 20 qui s'emboîte dans l'enveloppe externe 18 et qui délimite un boîtier ou porte cellule cylindrique dans lequel est insérée une cellule de force à jauge de contrainte 21 de gamme de mesure de 0 à 2000 N, une lumière 22 étant prévue dans le couvercle 19 et dans le rebord 20 pour permettre le passage des câbles 23 de connexion de la cellule de force 21.

La tête 24 de la tige de commande 16 du piston est maintenue par une douille à billes 25 dans un porte piston 26 annulaire d'allure cylindrique pouvant se déplacer dans l'enveloppe externe 18 et qui est retenu vers le bas dans cette enveloppe externe par un anneau-ressort 27. La tête 24 de la tige de commande 16 du piston prend en outre appui sur un poussoir 28 qui prend lui-même appui sur le porte piston 26 et qui peut entraîner le porte piston 26 vers le haut par l'intermédiaire de l'anneau-ressort 29 prévu dans ce porte piston.

Le porte piston 26 est également pourvu d'un ensemble comprenant une coupelle 30 et un poussoir 31 maintenus écartés l'un de l'autre par un ressort taré 32 précontraint sous une tension de 100 N, la coupelle 30 prenant appui sur le poussoir 28 et le poussoir 31 étant retenu contre l'action du ressort taré 32 par un anneau-ressort 33 prévu dans le porte piston 26.

L'enveloppe externe 18 contient également un porte cellule 34 cylindrique et de section annulaire pourvu d'un rebord interne 35 ce porte cellule 34 étant situé au dessus du porte piston et légèrement écarté de celui-ci.

La partie inférieure du porte cellule 34 constitue un boîtier dans lequel est insérée une cellule de force 36 de gamme de mesure de 0 à 100 N qui prend appui sur le rebord interne 35 et dont le poussoir de mesure 37 est en contact avec le poussoir 31. Des lumières 41 sont prévues dans l'enveloppe externe 18 et dans le porte cellule 34 pour permettre le passage des câbles de connexion 41' de la cellule de force 36. Les câbles 23 et 41' constituent en fait le câble 10 qui est raccordé au boîtier de commande et de contrôle.

La partie supérieure du porte cellule 34 située au dessus du rebord interne 35 est équipée d'un ressort taré 38 précontraint sous une tension de 2000 N qui prend appui sur le rebord interne 35 et tend à repousser un poussoir 39 qui est retenu dans le porte cellule 34 par un anneau-ressort 40 prévu dans ce porte cellule.

En position de repos, le poussoir 39 est en contact direct avec le poussoir de mesure de la cellule de force 21 et les extrémités du porte cellule 34 sont écartés par un jeu prédéterminé des extrémités du porte piston 26 et du rebord 20.

Le fonctionnement du dispositif ainsi décrit est le suivant : le dispositif tel que illustré étant en repos c'est-à-dire non soumis à l'action d'une force à mesurer.

Sous l'action d'une telle force, la tige de commande 16 du piston tend, par sa tête 24, à pénétrer dans l'enveloppe externe 18. Cet effort est ainsi transmis via le poussoir 28, le porte piston 26 et le poussoir 31 à la cellule de force 36 qui émet, dès lors, un signal proportionnel à cette force.

Dès que la force à mesurer dépasse 100 N, le ressort 32 s'écrase et la force transmise à la cellule de force reste à une valeur de 100 N ce qui empêche toute détérioration de cette cellule.

Compte tenu du fait que le jeu prévu entre le porte piston 26 et le porte cellule 34 est calculé de façon telle que ces deux éléments entrent en contact dès que la force à mesurer atteint 100N, toute force exercée supérieure à cette valeur reste, dès lors, transmise via le porte-piston 26, le porte cellule 34 et le poussoir 39 à la cellule de force 21 qui à son tour émet un signal proportionnel à cette force.

Enfin, si l'effort exercé par la tige de commande 16 du piston dépasse accidentellement 2000 N, le ressort 38 s'écrase à son tour et la force transmise à la cellule de force 21 reste à la valeur maximum de 2000 N. Compte tenue du fait que le jeu entre le porte cellule 34 et le rebord 20 est calculé de façon telle que ces deux éléments entrent en contact dès que la force à mesurer atteint 2000 N, une force exercée par le piston qui accidentellement excéderait 2000 N serait dès lors reprise par le couvercle 19 sans aucun risque de détérioration mécanique des cellules de force 21 et 36.

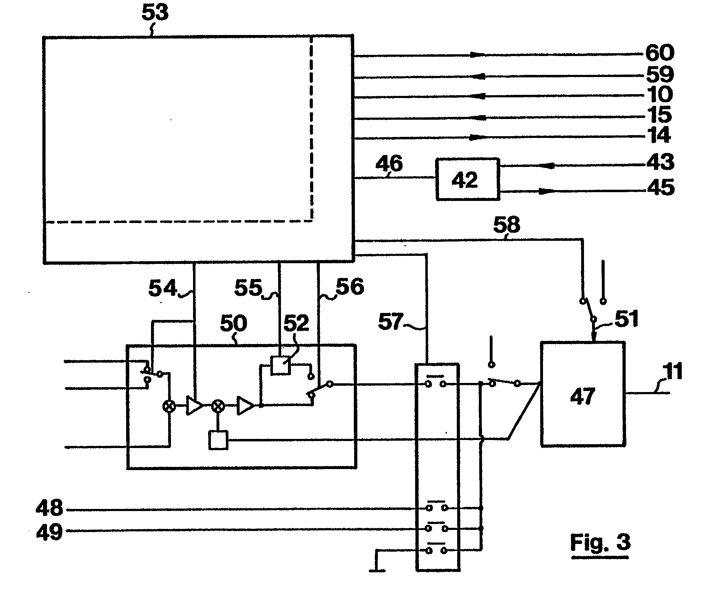

Ainsi qu'il apparaît sur le schéma de la fig. 3, le boîtier de commande et de contrôle 1 qui contient le système électronique qui gère les fonctions de mesure, de commande, de signalisation et d'alarme comprend un régulateur de température 42, un bloc de commande 47 du moteur pas à pas, un régulateur de force 50 et un système à microprocesseur 53.

Le régulateur de température 42 du type PID (proportionnel, intégral, dérivée) est raccordé par le câble 43 à une sonde de température 44 du type Pt100 disposée dans le chemisage 4 du cylindre 3 et assure la thermostatisation du chemisage 4 par l'intermédiaire d'un élément chauffant (non représenté) alimenté par le câble 45. Il est bien évident que l'on peut disposer plusieurs sondes espacées le long du chemisage 4. En cas de dépassement d'une limite haute ou basse de température, le régulateur de température 42 envoie un signal d'alarme vers le système à microprocesseur 53 via le câble 46.

Le bloc de commande 47 du moteur pas à pas reçoit une tension analogique (0-10V) provenant soit du régulateur de force 50 (dans le cas de la mesure d'un indice de fusion) soit d'un générateur de consigne (non représenté) via les câbles 48, 49 (dans le cas de la mesure d'une viscosité et/ou d'un gonflement). Dans ce dernier cas les câbles 48 et 49 amènent une tension correspondant soit à une vitesse de déplacement maximum du piston soit à une vitesse de consigne (vitesse imposée par la mesure). Une entrée tout ou rien 51 détermine le sens d'action du moteur pas à pas (montée ou descente du piston).

La sortie 11 de ce bloc fournit les impulsions de puissance nécessaires à la commande du moteur pas à pas, la fréquence de ces impulsions étant porportionnelle à la tension analogique d'entrée.

L'image des impulsions réellement envoyées au moteur pas à pas est introduite dans le système à microprocesseur où un compteur totalisateur (non représenté) permet de déterminer avec précision les positions instantanées du piston mu par le moteur pas à pas.

Le régulateur de force 50 est uniquement en service lors de la mesure d'un indice de fusion. Il est du type proportionnel-intégral. Sous le contrôle du système à microprocesseur 53 il permet automatiquement de choisir des valeurs de gain en fonction de l'échantillon à évaluer. Un circuit "Sample and Hold" ou échantillonneur-bloqueur 52 est prévu pour satisfaire les besoins du profil de mesure adopté (mémorisation de la tension à appliquer dans la dernière étape).

Le système à microprocesseur 53 est constitué de deux parties distinctes :

- d'une part, l'ensemble de cartes industrielles à microprocesseurs comprenant le processeur (type 8085A), les mémoires RAM et ROM, les compteurs d'impulsion, les entrées et sorties vers l'extérieur et éventuellement une sortie vers une imprimante et/ou un écran non représentés.

Les entrées et sorties comprennent notamment les câbles 54, 55, 56 et 57 de sortie vers le régulateur de force 50, le câble 58' de sortie vers le bloc de commande 47, le câble 46 d'entrée pour l'alarme du régulateur de température, le câble 10 d'entrée du signal émis par le capteur de force 9, le câble de sortie 14 vers le dispositif 12 de découpe du jonc, le câble d'entrée 15 du détecteur de jonc 13, les câbles d'entrée 59 des détecteurs de défauts (filière défectueuse ou placée incorrectement, absence de matériau à tester, etc) et les câbles de sorties 60 vers les témoins d'alarme ou de signalisation.

- d'autre part, l'ensemble de cartes d'adaptation ou d'interface constituant le lien entre les entrées et sorties vers les autres constituants. Cet interface adapte le niveau des tensions ou la forme des signaux tout ou rien (capteurs de positions) aux exigences des cartes à microprocesseur.

Le programme introduit dans la mémoire ROM du microprocesseur 53 comprend le profil de mesure adopté, la gestion des entrées/sorties, la gestion des alarmes et des signalisations ainsi que la sortie éventuelle vers une imprimante et/ou un écran.

Avec l'appareillage tel que décrit on a réalisé un grand nombre d'essais qui ont fait apparaître que celui-ci est très précis et parfaitement fiable.

Une sélection parmi ces essais est donnée ci-après à titre d'exemples illustratifs.

Exemple 1

Avec l'appareil décrit on a évalué l'indice de fusion 2,16 d'un polyéthylène ELTEX B4020 produit par la demanderesse.

La mesure a été effectuée en 30 secondes après le conditionnement thermique à 190°C et a donné comme valeur : 2,078 gr/10 min. Un essai parallèle effectué selon la Norme ASTM D 1238-82 au moyen d'un appareil classique (Meltindexer CEAST 6542/000) a donné comme valeur 2,05±0,06 g/10 min.

Un troisième essai effectué sur l'appareillage décrit mais dans lequel la mesure a été effectuée selon les conditions de la norme ASTM D 1235-82 a donné comme valeur 2,005 g/10 min.

Exemple 2

Avec l'appareillage décrit, on a évalué l'indice de fusion 0,325 d'un polyéthylène ELTEX A1050 produit par la demanderesse, la mesure étant effectuée selon les conditions de la norme ASTM-D-1238-82. L'essai a donné comme résultat : 0,681 g/10 min ce qui correspond pratiquement a l'indice de fusion moyen relevé à l'aide d'appareillages classiques.

Exemple 3

Avec l'appareillage décrit équipé d'une filière L/D = 15/1 on évalue la viscosité dynamique et le gonflement à gradient de vitesse de 100 sec$^{-1}$ (42) d'un polyéthylène ELTEX A1050 produit par la demanderesse. La mesure effectuée en 30 secondes après le conditionnement thermique à 190° a donné comme valeur 7385,23 dPa.s pour la viscosité et 1,339 pour le gonflement.

Un essai parallèle effectuée au moyen d'un viscosimètre CIL (Canadian Ind. Ltd) a donné comme valeur de viscosité : 7480 ± 250 dPA.s.

Exemple 4

Avec l'appareillage utilisé à l'exemple 3 on a évalué la viscosité dynamique et le gonflement à gradient de vitesse de 1000 sec$^{-1}$ (43) d'un polyéthylène ELTEX A3999 produit par la demanderesse. La mesure effectuée en 30 secondes après le conditionnement thermique à 190° a donné comme valeur : 410,01 dPa.s pour la viscosité et 1,481 pour le gonflement. Il convient ici de noter que compte tenu de la fluidité extrême de cette résine, il n'est pas possible de mesurer son gonflement par les méthodes usuelles.

Un essai parallèle effectué au moyen d'un viscosimètre CIL a donné comme valeur de viscosité : 400 ± 25 dPa.s.

Exemple 5

Avec l'appareillage décrit équipé d'une filière L/D : 30/2 on a évalué la viscosité dynamique et le gonflement à gradient de vitesse de 100 sec$^{-1}$ (42) d'un polyéthylène ELTEX B3002 produit par la demanderesse.

La mesure effectuée en 30 secondes après le conditionnement thermique à 190° a donné comme valeur : 17538,5 dPa.s pour la viscosité et 1,539 pour le gonflement.

Un essai parallèle effectué au moyen d'un viscosimètre GOTTFERT HKV 2000 a donné comme valeur de viscosité : 17500 ± 350 dPa.s.

Il apparaît en conséquence que l'appareillage conforme à l'invention convient parfaitement pour évaluer les propriétés rhéologiques des matières thermoplastiques soit en conformité avec les normes usuelles soit selon une méthode plus rapide.

**Revendications**

1 - Appareillage pour la détermination rapide des propriétés rhéologiques d'une matière thermoplastique comprenant :
- un boîtier de commande et de contrôle (1)
- un cylindre (2) destiné à recevoir une dose déterminée de la matière thermoplastique à évaluer et équipé d'un chemisage thermostatisé (4) pour le conditionnement thermique, durant au moins 300 secondes et à température prédéterminée, de la dose de matière thermoplastique à évaluer - un piston (3) pouvant coulisser dans le cylindre (2) de façon à s'appliquer contre la dose de matière thermoplastique
- un système échangeur (5) permettant d'équiper le cylindre d'une filière à capillaire (6) adaptée à la mesure rhéologique à effectuer
- un moteur à commande pas à pas (7) assurant un déplacement contrôlé du piston (3) dans le cylindre (2) pour expulser la matière thermoplastique via la filière à capillaire (6) et
- un capteur de force (9) disposé entre le moteur (7) et le piston (3) donnant un signal en fonction de la force appliquée au piston (3) caractérisé en ce qu'il comporte, en outre, un système électronique à microprocesseur contrôlant le moteur à commande pas à pas (7) en fonction de la position du piston (3) et/ou du signal émis par le capteur de force (9) de façon telle qu'à la fin du conditionnement thermique, le piston (3) se trouve à une distance de la filière à capillaire (6) autorisant la mesure à effectuer et agisse depuis un laps de temps variant de 10 à 180 secondes sur la dose de matière thermoplastique à évaluer selon un paramètre de vitesse de déplacement ou de force appliquée imposé par le type de mesure rhéologique à effectuer.

2 - Appareillage selon la revendication 1 caractérisé en ce que, en vue de permettre une mesure rhéologique de gonflement, il est équipé d'un dispositif (12) permettant la découpe du jonc de matière thermoplastique extrudé au ras de la filière à capillaire et d'un dispositif optique (13) de détection du jonc extrudé situé à une distance prédéterminée de l'extrémité de la filière à capillaire (6).

3 - Appareillage selon la revendication 1 ou 2 caractérisé en ce que le cylindre (2), le chemisage thermostatisé (4) et le piston (3) sont réalisés selon la norme ASTM D 1238-82.

4 - Appareillage selon l'une quelconque des revendications 1 à 3 caractérisé en ce que le capteur de force (9) est constitué par une pluralité de cellules de force (21) (36) à jauge de contrainte disposées en série, chaque cellule de force étant insérée dans un boîtier qui assure le transfert de l'effort exercé sur la cellule de force qu'il contient à la suivante de gamme de mesures plus élevée lorsque cet effort dépasse la valeur maximum acceptable pour cette cellule de mesure.

5 - Appareillage selon la revendication 4 caractérisé en ce que chaque cellule de force (21) (36) est, en outre, protégée mécaniquement par un système de transmission de la force à mesurer constitué par un ressort taré (32) (38) précontraint à la valeur maximale acceptable pour chaque cellule de force.

6 - Appareillage selon l'une quelconque des revendications 1 à 5 équipé d'une filière (6) adaptée pour la mesure d'un indice de fusion caractérisé en ce que le système électronique dans une première étape, après 5 à 30 secondes de conditionnement thermique de la dose de matière thermoplastique à évaluer contrôle le moteur à commande pas à pas (7) de façon telle que le piston (3) durant 50 à 150 secondes applique sur la dose de matière thermoplastique une force égale à celle devant être appliquée pour la mesure d'un indice de fusion, évalue la vitesse de déplacement du piston (3) sous l'effet de cette force et détermine les paramètres de régulation idéaux en fonction de la matière thermoplastique examinée, dans une seconde étape contrôle le moteur à commande pas a pas (7) de façon telle que la force appliquée au piston (3) soit réduite ou accrue durant un laps de temps et, dans une troisième étape, après 120 à 290 secondes de conditionnement thermique contrôle le moteur à commande pas à pas (7) de façon telle que le piston (3) applique de nouveau sur la dose de matière thermoplastique à évaluer une force égale à la force devant être appliquée durant la mesure, la troisième étape étant initiée à un instant tel que l'application de cette force amène le piston (3) à la distance prédéterminée de la filière (6) autorisant la mesure à la fin du délai imparti pour le conditionnement thermique, cette force étant maintenue constante pendant toute la durée de la mesure subséquente.

7 - Appareillage selon la revendication 6 caractérisé en ce que le système électronique durant le début de la première étape contrôle le moteur à commande pas à pas (7) de façon telle que le piston (3) applique tout d'abord sur la dose de matière thermoplastique une force inférieure à la force devant être appliquée durant la mesure et ce durant 10 à 90 secondes de façon à permettre une première évaluation du gain du système électronique et une estimation de la durée idéale de la phase suivante de la première étape durant laquelle le système électronique, via le moteur à commande pas à pas (7) applique sur la dose de matière thermoplastique une force égale à celle devant être appliquée durant la mesure rhéologique à effectuer.

8 - Appareillage selon la revendication 6 ou 7 caractérisé en ce que le temps de mesure est de 10 à 60 secondes, l'appareillage effectuant au moins trois mesures successives de durée égale durant ce temps et effectuant une comparaison entre ces mesures successives et leur moyenne en vue de détecter un écart éventuel entre ces mesures et leur moyenne supérieur à 25 %.

9 - Appareillage selon l'une quelconque des revendications 1 à 5 équipé d'une filière (6) adaptée pour la mesure d'une viscosité et/ou d'un gonflement caractérisé en ce que le système électronique, après 5 à 30 secondes de conditionnement thermique de la dose de matière thermoplastique à évaluer, détermine en fonction de la position du piston (3) en contact avec la dose et du temps de conditionnement thermique la vitesse moyenne à imposer au déplacement du piston (3) pour amener celui-ci à la distance prédéterminée de la filière (6) à la fin du délai imparti pour le conditionnement thermique et compare cette vitesse moyenne à la vitesse constante à imposer au piston (3) pour la mesure à effectuer, puis dans une première étape contrôle le moteur à commande pas à pas (7) de façon telle que le piston (3) se déplace à une vitesse plus faible ou plus élevée que cette vitesse moyenne et, dans une seconde étape, contrôle le moteur à commande pas à pas (7) de façon telle que le piston (3) se déplace à la vitesse constante imposée pour la mesure à effectuer, cette seconde étape étant initiée à un instant tel que cette vitesse constante de déplacement du piston (3) amène celui-ci à la distance prédéterminée de la filière (6) à la fin du délai imparti pour le conditionnement thermique, cette vitesse constante de déplacement du piston étant maintenue pendant toute la durée de la mesure à effectuer.

10 - Appareillage selon la revendication 9 caractérisé en ce que durant les 30 secondes qui précèdent le moment ou le piston (3) atteint la distance prédéterminée de la filière, l'appareillage de mesure effectue une pluralité de mesures successives de la force appliquée sur le piston (3) et compare ces mesures entre elles et avec leur moyenne de façon à détecter tout écart de plus de 5 %.

**Claims**

1. Apparatus for rapidly determining the rheological properties of a thermoplastic, comprising:
    – an operating and control housing (1);
    – a cylinder (2) intended to receive a given quantity of the thermoplastic material to be evaluated and equipped with a temperature-regulated lining (4) for thermal conditioning, during at least 300 seconds and at a predetermined temperature, of the quantity of thermoplastic material to be evaluated;
    – a piston (3) capable of sliding inside the cylinder (2) so as to apply it against the quantity of thermoplastic material;
    – an exchanger system (5) enabling the cylinder to be equipped with a capillary die (6) suitable for the rheological measurement to be performed;
    – a stepped drive motor (7) ensuring a controlled displacement of the piston (3) inside the cylinder (2) in order to expel the thermoplastic material via the capillary die (6) and
    – a force sensor (9), arranged between the motor (7) and the piston (3), providing a signal according to the force applied to the piston (3), characterized in that it comprises moreover an electronic microprocessor system controlling the stepped motor (7) according to the position of the piston (3) and/or of the signal emitted by the force sensor (9) such that, at the end of thermal conditioning, the piston (3) is located at a distance from the capillary die (6) allowing the measurement to be performed and aots, for a period of time varying from 10 to 180 seconds, on the quantity of thermoplastic material to be evaluated in accordance with a speed of displacement or force applied parameter determined by the type of rheological measurement to be performed.

2. Apparatus according to Claim 1, characterized in that, in order to allow a rheological measurement of swelling, it is equipped with a device (12) allowing the cutting of the rod of thermoplastic material extruded flush with the capillary die, and with an optical device (13) for detecting the extruded rod situated at a predetermined distance from the end of the capillary die (6).

3. Apparatus according to Claim 1 or 2, characterized in that the cylinder (2), the temperature-regulated lining (4) and the piston (3) are made in accordance with the Standard ASTM D 1238-82.

4. Apparatus according to any one of Claims 1 to 3, characterized in that the force sensor (9) consists of a plurality of strain-gauge force celles (21) (36) arranged in series, each force cell being inserted inside a housing which ensures the transfer of the load exerted on the force cell which it contains to the next one with a higher measuring range when this load exceeds the maximum acceptable value for this measuring cell.

5. Apparatus according to Claim 4, characterized in that each force cell (21) (36) is, moreover, protected mechanically by a system for transmitting the force to be measured, consisting of a calibrated spring (32) (38) prestressed to the maximum acceptable value for each force cell.

6. Apparatus according to any one of Claims 1 to 5, equipped with a die (6) suitable for the measurement of a melt index, characterized in that the electronic system, during a first stage, after 5 to 30 seconds of thermal conditioning of the quantity of thermoplastic material to be evaluated, controls the stepped drive motor (7) such that the piston (3) for 50 to 150 seconds applies onto the quantity of plastic material a force equal to that which must be applied for the measurement of a melt index, evaluates the speed of displacement of the piston (3) under the effect of this force and determines the ideal regulation parameters according to the thermoplastic material examined, during a second stage, controls the stepped drive motor (7) such that the force applied to the piston (3) is reduced or increased for a certain period of time and, during a third stage, after 120 to 290 seconds of thermal conditioning controls the stepped drive motor (7) such that the piston (3) applies again onto the quantity of thermoplastic material to be evaluated a force equal to the force which must be applied during the measurement, the third stage being initiated at an instant such that the application of this force brings the piston (3) to the predetermined distance from the die (6) allowing measurement at the end of the time period assigned for thermal conditioning, this force being kept constant for the entire duration of the subsequent measurement.

7. Apparatus according to Claim 6, characterized in that the electronic system during the start of the first stage controls the stepped drive motor (7) such that the piston (3) applies first of all onto the quantity of thermoplastic material a force less than the force which must be applied during the measurement, for 10 to 90 seconds so as to allow a first evaluation of the gain of the electronic system and an estimation of the ideal duration of the following phase of the first stage during which the electronic system, via the stepped drive motor (7), applies onto the quantity of thermoplastic material a force equal to that which must be applied during the rheological measurement to be performed.

8. Apparatus according to Claim 6 or 7, characterized in that the measuring time is from 10 to 60 seconds, the apparatus performing at least three successive measurements of equal duration during this time and performing a comparison between the successive measurements and their mean in order to detect any deviation between these measurements and their mean greater than 25%.

9. Apparatus according to any one of Claims 1 to 5, equipped with a die (6) suitable for a viscosity and/or a swelling measurement, characterized in that the electronic system, after 5 to 30 seconds of thermal conditioning of the quantity of thermoplastic material to be evaluated, determines, according to the position of the piston (3) in contact with the quantity and the thermal conditioning time assigned, the mean speed to be imposed on the displacement of the piston (3) in order to bring the latter at the predetermined distance from the die (6) at the end of the time period assigned for the thermal conditioning and compares this mean speed to the constant speed to be imposed on the piston (3) for the measurement to be performed, then during a first stage, controls the stepped drive motor (7) such that the piston (3) moves at a speed lower or higher than this mean speed and, during a second stage, controls the stepped drive motor (7) such that the piston (3) moves at the constant speed imposed for the measurement to be performed, this second stage being initiated at an instant such that this constant speed of displacement of the piston (3) brings the latter to the predetermined distance from the die (6) at the end of the time period assigned for thermal conditioning, this constant speed of displacement of the piston being maintained for the entire duration of the measurement to be performed.

10. Apparatus according to Claim 9, characterized in that, during the 30 seconds which precede the moment when the piston (3) reaches the predetermined distance from the die, the measuring apparatus carries out a plurality of successive measurements of the force applied onto the piston (3) and compares these measurements with each other and with their mean so as to detect any deviation of more than 5%.

**Patentansprüche**

1. Gerät zur schnellen Ermittlung der rheologischen Eigenschaften eines thermoplastischen Stoffes, umfassend:

– ein Steuer- und Kontrollgehäuse (1)

– einen Zylinder (2) bestimmt zur Aufnahme einer bestimmten Menge des zu bewertenden thermoplastischen Stoffes und ausgerüstet mit einem thermostatisierten Mantel (4) zum thermischen Konditionieren der Menge des zu bewertenden thermoplastischen Stoffes während wenigstens 300 Sekunden und bei vorbestimmter Temperatur

– einen Kolben (3), der in dem Zylinder (2) gleiten kann, derart, daß er gegen die Menge thermoplastischen Stoffes wirkt

– ein Austauschersystem (5), das die Ausrüstung des Zylinders mit einer Kapillardüse (6) erlaubt, die für die durchzuführende rheologische Messung geeignet ist

– ein Schritt-Antriebsmotor (7), der eine kontrollierte Bewegung des Kolbens (3) in dem Zylinder (2) ermöglicht, um den thermoplastischen Stoff über die Kapillardüse (6) auszustoßen und

– ein Kraftmeßgerät (9), das zwischen dem Motor (7) und dem Kolben (3) liegt und ein Signal in Abhängigkeit der auf den Kolben (3) ausgeübten Kraft gibt, dadurch gekennzeichnet, daß es außerdem ein elektronisches Mikroprozessorsystem umfaßt, das den Schritt-Antriebsmotor (7) in Abhängigkeit der Stellung des Kolbens (3) und/oder des durch das Kraftmeßgerät (9) ausgestoßenen Signals kontrolliert, derart, daß am Ende des thermischen Konditionierens der Kolben (3) sich in einem Abstand zu der Kapillardüse (6) befindet, der die durchzuführende Messung erlaubt, und in einem Zeitraum zwischen 10 und 180 Sekunden auf die Menge des zu bewertenden thermoplastischen Stoffes gemäß einem Geschwindigkeits-Parameter der Bewegung oder der ausgeübten Kraft, je nach der Art der durchzuführenden rheologischen Messung, wirkt.

2. Gerät nach Anspruch 1, dadurch gekennzeichnet, daß es, mit Hinblick auf eine rheologische Ausdehnungsmessung, mit einer Vorrichtung (12), die das Abschneiden des extrudierten Stranges aus thermoplastischen Material unmittelbar an der Kapillardüse erlaubt, und mit einer optischen Prüfeinrichtung (13) des extrudierten Stranges, die in einem vorbestimmten Abstand zum Ende der Kapillardüse (6) liegt, ausgerüstet ist.

3. Gerät nach Anspruch 1 oder 2, dadurch gekennzeichnet, daß der Zylinder (2), der thermostatisierte Mantel (4) und der Kolben (3) nach der ASTM D 1238-82-Norm hergestellt sind.

4. Gerät nach einem der Ansprüche 1 bis 3, dadurch gekennzeichnet, daß das Kraftmeßgerät (9) aus einer Vielzahl hintereinanderliegender Dehnungsmeßgerät-Kraftzellen (21) (36), gebildet ist, wobei jede Kraftzelle in ein Gehäuse eingefügt ist, das die Übertragung des ausgeübten Druckes auf die in ihm enthaltene Kraftzelle, auf die folgende mit höherem Meßbereich sichert, wenn dieser Druck den akzeptablen Maximalwert für diese Meßzelle übersteigt.

5. Gerät nach Anspruch 4, dadurch gekennzeichnet, daß jede Kraftzelle (21) (36) außerdem durch ein Transmissionssystem der zu messenden Kraft mechanisch geschützt ist, das durch eine geeichte Feder (32) (38), die nach dem für jede Kraftzelle akzeptablen Maximalwert vorgespannt ist, gebildet ist.

6. Gerät nach einem der Ansprüche 1 bis 5, ausgerüstet mit einer Düse (6), die zur Messung eines Fusionsindex geeignet ist, dadurch gekennzeichnet, daß das elektronische System in einer ersten Stufe, nach 5 bis 30 Sekunden thermischen Konditionierens der Menge des zu bewertenden thermoplastischen Stoffes, den Schritt-Antriebsmotor (7) steuert, derart, daß der Kolben (3) während 50 bis 150 Sekunden auf die Menge thermoplastischen Stoffes eine Kraft ausübt, die gleich derjenigen ist, die zur Messung eines Fusionsindex ausgeübt werden muß, die Bewegungsgeschwindigkeit des Kolbens (3) unter der Einwirkung dieser Kraft bewertet und die idealen Regulationsparameter in Abhängigkeit des untersuchten thermoplastischen Stoffes bestimmt, in einer zweiten Stufe den Schritt-Antriebsmotor (7) steuert, derart, daß die auf den Kolben (3) ausgeübte Kraft während einer bestimmten Zeit reduziert oder vergrößert wird und in einer dritten Stufe, nach 120 bis 290 Sekunden thermischen Konditionierens den Schritt-Antriebsmotor (7) steuert, derart, daß der Kolben (3) von neuem auf die Menge des zu bewertenden thermoplastischen Stoffes eine Kraft ausübt, die gleich derjenigen Kraft ist, die während der Messung ausgeübt werden muß, wobei die dritte Stufe in einem Moment einsetzt, in dem die Ausübung dieser Kraft den Kolben (3) in den vorbestimmten Abstand zu der Düse (6) bring, der die Messung am Ende der für die thermische Konditionierung benötigten Zeit möglich macht, wobei diese Kraft während der gesamten Dauer der nachfolgenden Messung konstant gehalten wird.

7. Gerät nach Anspruch 6, dadurch gekennzeichnet, daß das elektronische System während des Beginns der ersten Stufe den Schritt-Antriebsmotor (7) steuert, derart, daß der Kolben (3) zuerst auf die Menge thermoplastischen Stoffes eine Kraft ausübt, die kleiner als diejenige Kraft ist, die während der Messung ausgeübt werden muß und dies während 10 bis 90 Sekunden, so daß eine erste Bewertung der Leistung des elektronischen Systems und eine Abschätzung der idealen Dauer der auf die erste Stufe folgenden Phase möglich ist, während der das elektronische System über den Schritt-Antriebsmotor (7) auf die Menge thermoplastischen Stoffes eine Kraft ausübt, die gleich derjenigen ist, die während durchzuführenden rheologischen Messung ausgeübt werden muß.

8. Gerät nach Anspruch 6 oder 7, dadurch gekennzeichnet, daß die Meßdauer zwischen 10 und 60 Sekunden beträgt, wobei das Gerät wenigstens 3 hintereinanderfolgende Messungen gleicher Dauer während dieser Zeit und einen Vergleich zwischen diesen hintereinanderfolgenden Messungen und ihrem Durchschnitt durchführt mit Hinblick auf die Entdeckung einer eventuellen Abweichung zwischen diesen Messungen und ihrem Durchschnitt über 25%.

9. Gerät nach einem der Ansprüche 1 bis 5, ausgerüstet mit einer Düse (6), die zur Messung einer Viskosität und/oder Ausdehnung geeignet ist, dadurch gekennzeichnet, daß das elektronische System nach 5 bis 30 Sekunden thermischer Konditionierung der Menge des zu bewertenden thermoplastischen Stoffes, in Abhängigkeit der Stellung des Kolbens (3), der in Kontakt mit der Menge ist, und der Dauer der thermischen Konditionierung die Durchschnittsgeschwindigkeit bestimmt, die zur Bewegung des Kolbens (3) angewandt werden muß, um diesen in den vorbestimmten Abstand der Düse (6) am Ende der für die thermische Konditionierung benötigten Zeit zu bringen und diese Durchschnittsgeschwindigkeit mit der konstanten Geschwindigkeit, die dem Kolben (3) für die durchzuführende Messung gegeben werden muß, vergleicht, dann in einer ersten Stufe den Schritt-Antriebsmotor (7) steuert, derart, daß der Kolben (3) sich mit einer kleineren oder größeren Geschwindigkeit als dieser Durchschnittsgeschwindigkeit bewegt und, in einer zweiten Stufe den Schritt-Antriebsmotor (7) steuert, derart, daß der Kolben (3) sich mit der ihm für die durchzuführende Messung gegebenen, konstanten Geschwindigkeit bewegt, wobei diese zweite Stufe in einem Moment einsetzt, in dem diese konstante Bewegungsgeschwindigkeit des Kolbens (3) diesen in den vorbestimmten Abstand zur Düse (6) bringt am Ende der für die thermische Konditionierung benötigten Zeit, wobei diese konstante Bewegungsgeschwindigkeit des Kolbens während der gesamten Dauer der durchzuführenden Messung aufrechterhalten wird.

10. Gerät nach Anspruch 9, dadurch gekennzeichnet, daß während der 30 Sekunden die dem Moment, in dem der Kolben (3) den vorbestimmten Abstand zur Düse erreicht, vorausgehen, das Meßgerät eine Vielzahl von aufeinanderfolgenden Messungen der auf den Kolben (3) ausgeübten Kraft vornimmt und diese Messungen untereinander und ihrem Durchschnitt vergleicht, so daß jede Abweichung über 5% entdeckt wird.

Fig. 1

**Fig. 2**

Fig. 3

EP 0 210 689 B1